# EUROPÄISCHE PATENTSCHRIFT

(11) **EP 2 516 257 B1**
(45) Veröffentlichungstag und Bekanntmachung des Hinweises auf die Patenterteilung: **30.03.2016**
(21) Anmeldenummer: 10795703.7
(22) Anmeldetag: 20.12.2010
(51) Int. Cl.: B64C 3/50, B64C 7/00

(54) **FLÜGELANORDNUNG MIT EINER VERSTELLBAREN KLAPPE UND VERKLEIDUNGSELEMENT ZUM VERKLEIDEN EINES KLAPPENVERSTELLMECHANISMUS EINES FLÜGELS**
WING ASSEMBLY WITH AN ADJUSTABLE FLAP AND A FAIRING FOR ENCASING A FLAP ADJUSTING MECHANISM OF A WING
ENSEMBLE AILE MUNI D'UN VOLET RÉGLABLE ET D'UN CARENAGE POUR L'HABILLAGE D'UN MÉCANISME DE RÉGLAGE DE VOLET D'UNE AILE

(30) Priorität: 22.12.2009 DE 102009060082; 22.12.2009 US 289255 P
(43) Veröffentlichungstag der Anmeldung: 31.10.2012
(73) Patentinhaber: Airbus Operations GmbH, 21129 Hamburg (DE)
(72) Erfinder: SCHRÖDER, Karsten, 21244 Buchholz idN (DE)
(74) Vertreter: Maiwald Patentanwalts GmbH
(86) Internationale Anmeldenummer: PCT/EP2010/070297
(87) Internationale Veröffentlichungsnummer: WO 2011/076762

(56) Entgegenhaltungen:
- DE-A1- 3 641 247
- FR-A1- 2 792 285
- US-A- 4 034 939
- US-A- 5 096 142

## Beschreibung

### BEZUG AUF ZUGEHÖRIGE ANMELDUNGEN

Die vorliegende Anmeldung beansprucht die Priorität der US Provisional Patentanmeldung Nr. 61/289,255, eingereicht am 22. Dezember 2009 und der deutschen Patentanmeldung Nr. 10 2009 060 082.5, eingereicht am 22. Dezember 2009.

### TECHNISCHES GEBIET

Die Erfindung betrifft eine Flügelanordnung mit einer verstellbaren Klappe, sowie ein Verkleidungselement zum Verkleiden eines Klappenverstellmechanismus eines Flügels.

### HINTERGRUND DER ERFINDUNG

Zur Steigerung des Auftriebs oder zum Erhöhen des Widerstands werden bei Flugzeugen häufig verstellbare Klappen verwendet, die sich vor, auf, hinter oder unter einem Flügelprofil befinden können. Neben bekannten Vorflügeln und Spaltklappen oder Spoilern existieren insbesondere im sportlichen Automobilbau, aber auch vereinzelt im Flugzeugbau, relativ schmale, längliche Hinterkantenklappen, die auch unter dem Namen "Gurney Flaps" oder "Mini Trailing Edge Devices" (Mini TEDs) bekannt sind. Im Folgenden werden derartige Einrichtungen der Einfachheit halber "Klappen" genannt, da sich die nachfolgend geschilderte Erfindung ausschließlich auf derartige Klappen bezieht.

Diese Klappen werden im Flugzeugbau bevorzugt an der Unterseite von Flügeln im Bereich der Flügelhinterkante angeordnet und sind dazu eingerichtet, zwischen einer horizontalen (strömungsparallelen) und einer im Wesentlichen senkrechten Lage verschwenkt zu werden. In der senkrechten Lage erstrecken sich die Klappen von der Unterseite des Flügels senkrecht in die das Flugzeug umgebende Strömung.

Derartige Klappen sind relativ klein, beispielsweise könnte die Tiefe einer Klappe nur 1 % - 2 % der Flügeltiefe betragen. Dennoch kann dadurch ein deutlich bemerkbarer, auftriebserhöhender Effekt erreicht werden. Durch die Klappen wird die Abströmbedingung an der Hinterkante des Flügels geändert und daraufhin die Druckverteilung verbessert. Zusätzlich sollen diese Klappen aufgrund ihrer schnellen Bewegbarkeit auch in der Lage sein, Böen aktiv auszugleichen.

Zum Auslenken der Klappen sind Aktuatoren notwendig, die mittels Verkleidungselementen verkleidet werden müssen, sobald sie außerhalb des Flügelprofils verlaufen, da sie ohne eine Verkleidung in die Flügelumströmung ragen und den Widerstand des Flugzeugs erhöhen würden. Problematisch ist dabei, dass derartige Verkleidungselemente aufgrund des dort verlaufenden Klappenverstellmechanismus an der Flügelunterseite zu befestigen sind und dadurch den Klappen selbst im Weg sind.

Bei einer aerodynamischen günstigen Ausformung der Verkleidungselemente würden diese relativ weit über die Klappen stromabwärts hinausragen, so dass zum Ermöglichen einer Eintauchbewegung der Klappen ein entsprechender Ausschnitt auf der Oberseite der Verkleidungselemente notwendig wäre. Dieser könnte zwar das kinematische Problem beheben, jedoch auch zu einem Geräusch wie von einer Orgelpfeife führen, so dass eine derartige Lösung nicht unbedingt zu bevorzugen wäre.

Es wird ebenfalls eine Durchströmung quer durch das Verkleidungselement unterbunden, die ebenfalls zu aerodynamischem Widerstand führen kann.

Alternativ dazu könnte ein Verkleidungselement aerodynamisch derart suboptimal ausgestaltet werden, dass es bereits in einem Bereich vor der vorgesehenen senkrechten Endlage der Klappen endet, beispielsweise vor einer Scharnierlinie. Hierdurch würden jedoch abrupte Übergänge zwischen den Verkleidungselementen und der Umgebung entstehen, die zum Ausbilden von Wirbeln führen, die zu einem größeren Widerstand des Flugzeugs führen.

In DE 101 56 733 B4 und US 2003/0102410 A1 wird ein aerodynamisches Profil mit einer verstellbaren Klappe gezeigt, wobei die Klappe durch einen Stellhebel verstellt werden kann, der sich offen unterhalb des Profils befindet und nicht durch ein Verkleidungselement verkleidet ist.

DE 36 41 247 A1, die als nächstliegender Stand der Technik betrachtet wird, offenbart eine Verkleidung für Landeklappenführungsschienen, dessen Verkleidungskörper durch drei über Gelenke miteinander verbundener Teile ausgeführt ist und eine Einrichtung zur Bewegung des Verkleidungskörpers aufweist.

### ZUSAMMENFASSUNG DER ERFINDUNG

Eine Flügelanordnung mit verstellbaren Klappen im Flügelhinterkantenbereich ist aerodynamisch noch nicht optimal gelöst.

Eine Aufgabe der Erfindung könnte demnach darin liegen, eine Flügelanordnung mit einer verstellbaren Klappe vorzuschlagen, bei der ein mechanisch einfaches

Verstellen der Klappe erreicht werden kann, bei gleichzeitig hoher aerodynamischer Güte und geringer zusätzlicher Geräuschentwicklung einer Flügelanordnung.

Die Aufgabe wird gelöst durch eine Flügelanordnung gemäß den Merkmalen des unabhängigen Anspruchs 1. Vorteilhafte Weiterbildungen sind den Unteransprüchen zu entnehmen.

Eine erfindungsgemäße Flügelanordnung weist mindestens eine verstellbare Klappe auf, die zwischen einer eingefahrenen Position und mindestens einer ausgefahrenen Position verstellbar ist. Mindestens ein Verkleidungselement zum Verkleiden eines Verstellmechanismus der Klappe und mindestens an Abdeckelement sind an der Flügelanordnung positioniert. Das Verkleidungselement erstreckt sich stromabwärts mindestens bis zu der Klappe und weist an einer zu der Klappe gewandten Fläche einen Ausschnitt auf, der mit einer vorgesehenen Verstellbewegung der Klappe korreliert. Das Abdeckelement ist relativ zu dem Verkleidungselement bewegbar angeordnet und ist ferner dazu eingerichtet, in der eingefahrenen Position der Klappe den Ausschnitt des Verkleidungselements abzudecken und in einer ausgefahrenen Position zumindest teilweise freizugeben. Ein derartiges Verkleidungselement kann dadurch eine aerodynamisch günstige Form aufweisen und sich beispielsweise unterhalb eines Flügels stromabwärts über die Flügelhinterkante erstrecken. Das Erzeugen von widerstandserhöhenden Wirbeln aufgrund des Klappenverstellmechanismus kann für die Flügelanordnung daher für den Reiseflug eliminiert werden. Gleichzeitig kann sich die verstellbare Klappe ungehindert in eine ausgefahrene Position bewegen, da das Abdeckelement dazu eingerichtet ist, den Ausschnitt des Verkleidungselements nur dann vollständig zu verschließen, sobald sich die Klappe in der eingefahrenen Position befindet. Die aerodynamische Güte des Verkleidungselements wird im Reiseflug bei eingefahrener Klappe demnach nicht durch einen stets geöffneten Ausschnitt oder einen scharfen Querschnittsübergang verschlechtert. Die erfindungsgemäße Ausgestaltung der Flügelanordnung trägt demnach nicht zu einer zusätzlichen Erhöhung des Gesamtwiderstands des Flugzeugs und damit auch nicht zu einer Erhöhung des Kraftstoffbedarfs bei.

Gemäß einer vorteilhaften Ausführungsform der Erfindung weist das Verkleidungselement mindestens eine Wandung auf, die winklig zu der Unterseite des Flügels angeordnet ist, wobei das Abdeckelement eine korrespondierend geformte Abdeckwandung aufweist, die bündig an der Wandung des Verkleidungselements anliegt. Der Ausschnitt ist dabei in der mindestens einen Wandung ausgebildet. Ganz gleich, ob sich das Abdeckelement an der Innenseite der Wandung des Verkleidungselements befindet oder an der Außenseite, wird das Verkleidungselement im Bereich des Ausschnitts aerodynamisch günstig durch das Abdeckelement ergänzt und im Falle einer eingefahrenen Klappe gänzlich geschlossen.

Generell könnte die einfachste Form des Verkleidungselements der eines "Flap-Track-Fairings" eines Hochauftriebssystems ähneln und seitlich durch zwei Wandungen begrenzt werden, die mit einem Bodenelement zu einem wannenartigen Gehäuse ergänzt werden. Das Bodenelement befindet sich an einer vom Flügel abgewandten Seite des Verkleidungselements.

Gemäß einer vorteilhaften Ausführungsform ist die Klappe an einem Scharnier schwenkbar gelagert und vollführt bei Auslenkung eine Schwenkbewegung, die in einer senkrecht zur Scharnierachse ausgerichteten Ebene die Form eines Kreissegments abbildet. Dementsprechend ist der Ausschnitt in dem Verkleidungselement in einer Ebene senkrecht zur Scharnierachse gesehen korrespondierend geformt, d. h. er weist eine Kreissegmentform auf. Bei einem sich um 90° von einer annähernd horizontalen Lage in eine annähernd senkrechte Lage zur Längsachse der Flügelanordnung bewegenden Klappe ist demnach ein viertelkreisförmiger Ausschnitt an dem Verkleidungselement notwendig.

Gemäß einer vorteilhaften Ausführungsform ist das Abdeckelement in Form von zwei Abdeckwandungen ausgeführt, die relativ zu zwei korrespondierenden Wandungen des Verkleidungselements im Bereich des Ausschnitts des Verkleidungselements geführt werden. Dies ist eine mechanisch sehr einfache, aber dennoch robuste Lösung, die keine hohe Teilevielfalt erfordert und ein geringes Gewicht verursacht.

Gemäß einer vorteilhaften Ausführungsform ist das Abdeckelement federnd um eine Scharnierachse an dem Verkleidungselement gelagert. Die Scharnierachse könnte stromaufwärts von einer Scharnierachse der Klappe angeordnet sein oder mit dieser zusammenfallen. Die Ruheposition des Abdeckelements korrespondiert dabei mit einer eingefahrenen Klappe, so dass das Abdeckelement den Ausschnitt des Verkleidungselements bei eingefahrener Klappe minimiert. Dies bedeutet gleichermaßen, dass die Klappe das Abdeckelement bei einer Ausfahrbewegung gegen eine Federkraft eindrücken kann, so dass der Ausschnitt an dem Verkleidungselement durch Wegbewegen des Abdeckelements freigegeben wird. Beim Zurückschwenken der Klappe schwenkt das Abdeckelement bevorzugt federgestützt wieder zurück und verschließt dabei automatisch den Ausschnitt.

Gemäß einer weiteren vorteilhaften Ausführungsform ist das Abdeckelement an der zu dem Verkleidungselement ragenden Seite der Klappe angeordnet, so dass automatisch beim Bewegen der Klappe das Abdeckelement relativ zu dem Ausschnitt an dem Verkleidungselement geführt wird.

In einer vorteilhaften Ausführungsform ist das Verkleidungselement eine Leichtbaukomponente, die beispielsweise aus einem Sandwichmaterial oder dergleichen besteht. Gleichermaßen könnte es vorteilhaft sein, dass auch das Abdeckelement aus einem möglichst leichten, aber dennoch ausreichend festen Material besteht und beispielsweise als Leichtbaukomponente mit Sandwichaufbau ausgeführt ist.

Die Aufgabe wird auch durch ein Verkleidungselement sowie durch ein Abdeckelement gelöst, die dazu eingerichtet sind, einen Klappenverstellmechanismus abzudecken und in einer erfindungsgemäßen Flügelanordnung verwendet zu werden.

Die besonderen Vorteile der Erfindung der erfindungsgemäßen Flügelanordnung liegen darin, dass das Verkleidungselement starr ausgeführt werden kann, so dass keine beweglichen Teile notwendig sind und gleichzeitig eine höhere Steifigkeit des Verkleidungselements erreicht wird. Insbesondere beim Anbringen des Abdeckelements an der Klappe sind keine zusätzlichen beweglichen Teile notwendig, um die Abdeckung zu aktivieren oder zu deaktivieren. Gleichermaßen ist die optimale aerodynamische Form des Verkleidungselements erzielbar, so dass keine aerodynamischen Kompromisse eingegangen werden müssen. Zusätzlich ist die erfindungsgemäße Flügelanordnung sehr kostengünstig.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebige Kombination der Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte.

Fig. 1a, 1b, 1c, 1d und 1e zeigen drei Ausführungsbeispiele der erfindungsgemäßen Flügelanordnung in zwei Seitenansichten sowie anhand von zwei geschnittenen Draufsichten und einer isometrischen Ansicht.

Fig. 2 zeigt ein Flugzeug, das mit einer erfindungsgemäßen Flügelanordnung ausgestattet ist.

### DETAILLIERTE DARSTELLUNG EXEMPLARISCHER AUSFÜHRUNGSFORMEN.

Figur la zeigt ein erstes Ausführungsbeispiel einer erfindungsgemäßen Flügelanordnung 2, mit einem Flügels 4 und einer verstellbaren Klappe 6, die exemplarisch in einer ersten Position 6 und in einer zweiten Position 6' gezeigt wird. Unterhalb eines Hinterkantenbereichs 8 des Flügels 4 ist weiterhin ein Verkleidungselement 10 angeordnet, das sich von der Unterseite des Flügels 4 von dem Flügel 4 in der Zeichnungsebene nach unten erstreckt.

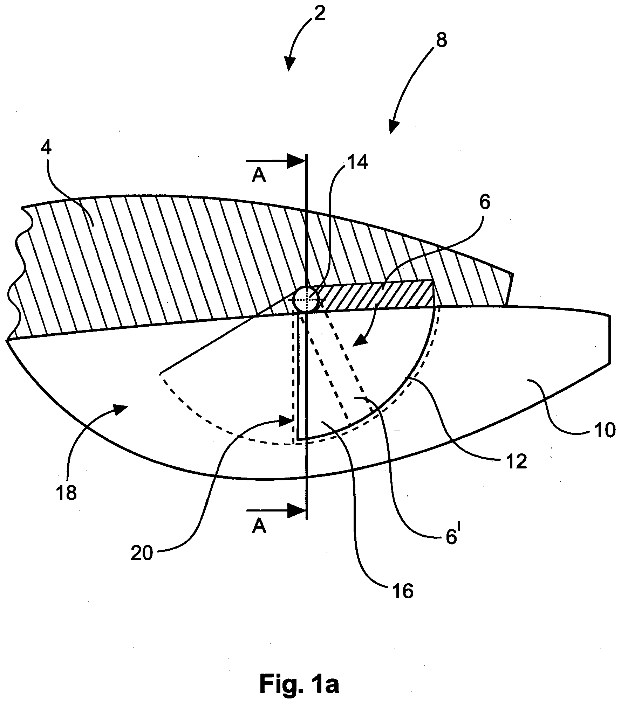

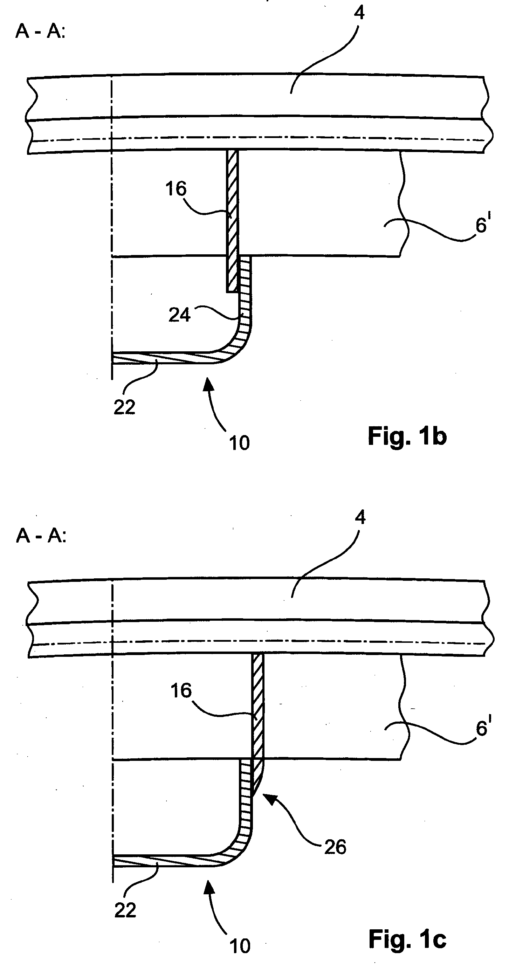

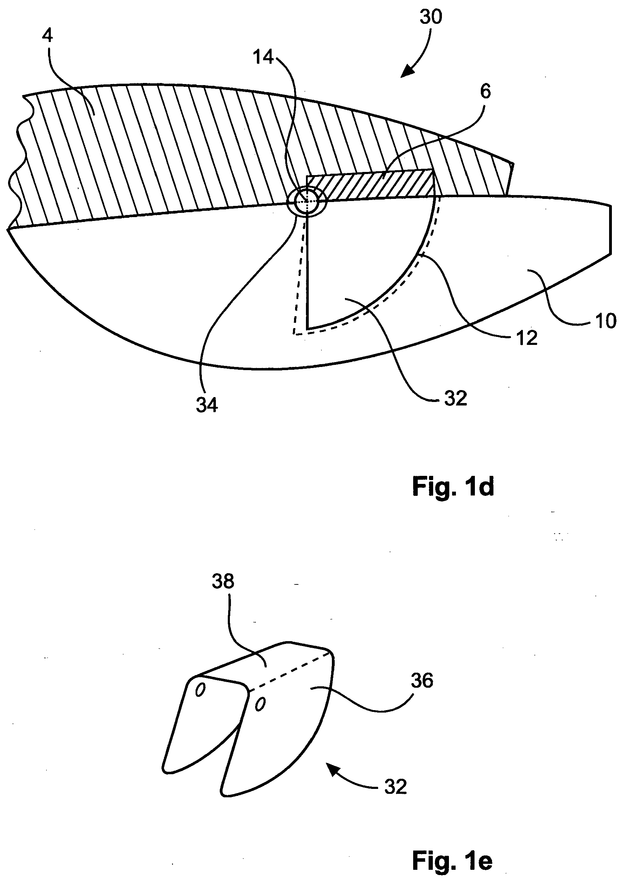

Das Verkleidungselement 10 weist einen viertelkreisförmigen Ausschnitt 12 auf, der ein Verschwenken der Klappe 6 um eine Scharnierachse 14 aus einer horizontalen, eingefahren Position in eine oder mehrere ausgefahrene Positionen 6' erlaubt, die in das Verkleidungselement 10 eintauchen würden. Der Einfachheit halber ist in der Darstellung aus Fig. 1 a kein Verstellmechanismus gezeigt, da beliebige Arten von Verstellmechanismen für eine Verstellbewegung der Klappe 6 Anwendung finden. Das Verkleidungselement 10 dient dazu, diesen Verstellmechanismus aerodynamisch vorteilhaft zu verkleiden.

Wäre der Ausschnitt 12 in sämtlichen Situationen offen, würde bei Luftströmungen um den Ausschnitt herum ein Geräusch erzeugt werden, was insbesondere bei Start und Landung aufgrund möglicher Lärmbelästigung von Personen am Boden bei Start und Landung und im Flugzeug während des normalen Flugs nicht gewünscht ist. Aus diesem Grunde ist die erfindungsgemäße Flügelanordnung 2 dazu eingerichtet, das Auslenken der Klappe 6 in die Strömung unterhalb des Flügels 4 zu erlauben, gleichzeitig bei eingefahrener Klappe 6, jedoch den Ausschnitt 12 komplett zu verschließen. Dies wird in dem hier gezeigten Ausführungsbeispiel dadurch gelöst, dass ein Abdeckelement 16 an einer vom Flügel 4 wegweisenden Seite der Klappe 6 angeordnet ist und korrespondierend mit dem Ausschnitt 12 ausgeformt ist. In dem vorliegenden Fall würde sich daher eine Viertelkreissegmentform anbieten, die zusammen mit der Klappe 6 um die Scharnierachse 14 herum verschwenkt werden könnte. Durch eine bündige Führung an mindestens einer Wandung 18 des Verkleidungselements 10 wird zwischen der vom Flügel 4 wegweisenden Seite der Klappe 6 und einer äußeren Begrenzungskante 20 der Ausschnitt 12 geschlossen.

Das Abdeckelement 16 kann an der vom Flügel 4 abgewandten Seite der Klappe 6 durch Anwendung form-, kraft- oder stoffschlüssiger Befestigungsverfahren befestigt werden. So könnten sich Schweiß- oder Nietverbindungen anbieten, gleichermaßen auch Klebeverbindungen. Zur Erreichung einer ausreichenden Elastizität unter Berücksichtigung von Flügelbewegungen, thermischer Expansion und dergleichen könnte eine nicht dargestellte elastische Zwischenlage zwischen dem Abdeckelement 16 und der Klappe 6 angeordnet werden, die etwa derart eingerichtet sein könnte, dass die Abdeckelementwandungen zu den Wandungen des Verkleidungselements drängen. Dies könnte durch eine leicht keilförmige Form erreicht werden. Zur Erreichung einer gewissen Restelastizität auch bei geringen Temperaturen aufgrund der hohen Temperaturunterschiede zwischen Bodenaufenthalt und Reiseflug könnte beispielsweise, ohne einen Anspruch auf Vollständigkeit zu erheben, ein Silikonkautschuk, Poly-Urethan oder Tetrafluorethylen eingesetzt werden. Diese Werkstoffe weisen außerdem den Vorteil auf, dass sie relativ hitzebeständig sind und auch bei heißen Tagen beim Bodenaufenthalt des Flugzeugs keine Beschädigung erleiden sollten.

Wird die Klappe 6 in eine eingefahrene Position zurückgeschwenkt, bei der die vom Flügel 4 abgewandte Seite der Klappe 6 mit der Unterseite des Flügels 4 eine ebene Oberfläche bildet, ist das Abdeckelement 16 vollständig an dem Ausschnitt 12 angeordnet, so dass dieser vollständig verschlossen wird. Dies bedeutet, dass das Verkleidungselement 10 nach außen hin stets eine vollständig geschlossene Oberfläche aufweist und die aerodynamische Güte im Wesentlichen der eines keinen Ausschnitt aufweisenden Verkleidungselements 10 entspricht.

Fig. 1b zeigt eine Draufsicht auf einen Schnitt entlang der Hinterkante des Flügels 4, auf die verschwenkte Klappe 6' gerichtet. Zu sehen ist das Verkleidungselement 10, welches beispielsweise wannenförmig ausgebildet sein könnte, eine entsprechende Bodenfläche 22 und mindestens eine Wandung 24 aufweist. Der Ausschnitt 12 ist in der Wandung 24 angeordnet und dient dazu, die Klappe 6' in der Zeichnungsebene nach unten ausschlagen zu können. Das Abdeckelement 16 befindet sich dabei auf der Innenseite des Verkleidungselements 10 und reibt bzw. gleitet bündig an der Innenseite der Wandung 24 entlang. Das Abdeckelement 16 und die Wandung 24 überlappen sich in einem kleinen Bereich und verschließen dadurch den Ausschnitt 12.

Das Verkleidungselement 10 sowie das Abdeckelement 16 können als Leichtbaukomponenten realisiert sein, beispielsweise mittels einer Sandwichbauweise mit einem Wabenkern und mindestens zwei außen liegenden, die Kernschicht begrenzenden Deckschichten. Dadurch weisen diese relativ geringfügig belasteten Bauteile ein niedriges Gewicht auf, jedoch eine ausreichende Steifigkeit, um ihre vorgegebene Form auch bei aerodynamischer Umströmung im Reiseflug zu halten.

Die Abwandlung in Fig. 1c zeigt ein sehr ähnliches Abdeckelement 16, das jedoch an der Außenseite der Wandung 24 entlang geführt wird. Dieses Abdeckelement 16 könnte zu den Wandungen 24 gerichtete Kanten 26 aufweisen, die zum Glätten der äußeren Oberfläche der Kombination aus Verkleidungselement und Abdeckelement, das optional leicht vorgespannt sein könnte, abgerundet sind.

Fig. 1d zeigt ein weiteres Ausführungsbeispiel in Form einer Flügelanordnung 30, bei der ein Abdeckelement 32 vorgesehen ist, das um eine Scharnierachse 14 schwenkbar an dem Verkleidungselement 10 gelagert ist und über eine exemplarisch dargestellte Drehfeder 34 in eine Abdeckposition gedrängt wird, in der der Ausschnitt 12 des Verkleidungselements 10 geschlossen ist. Das Abdeckelement 32 weist eine Form auf, die mit der Form des Ausschnitts 12 korrespondiert. Bevorzugt wird zwischen dem Abdeckelement 32 und dem Ausschnitt 12 eine Überlappung hergestellt. Auch in diesem Ausführungsbeispiel sind das Abdeckelement 32 und der Ausschnitt im Wesentlichen viertelkreisförmig gestaltet, so dass eine Bewegung der Klappe 6 um 90° aus einer horizontalen Lage in eine senkrecht unter den Flügel 4 ragende Position erlaubt wird.

Die Klappe 6 und das Abdeckelement 32 sind mechanisch nicht miteinander verbunden, vielmehr ist das Abdeckelement 32 dazu eingerichtet, von der Klappe 6 in das Verkleidungselement 10 gedrückt zu werden und bei Zurückschwenken der Klappe 6 den Ausschnitt 12 wieder zu schließen.

Wie in Fig. 1e schematisch in einer isometrischen Ansicht dargestellt, weist das Abdeckelement 32 neben zwei Wandungen 36 auch ein Deckenelement 38 auf, das die beiden Wandungen 36 miteinander verbindet. Bei eingefahrener Klappe 6 ist das Deckenelement 38 bündig mit der zu dem Flügel 4 ragenden Seite des Verkleidungselements 10 ausgerichtet.

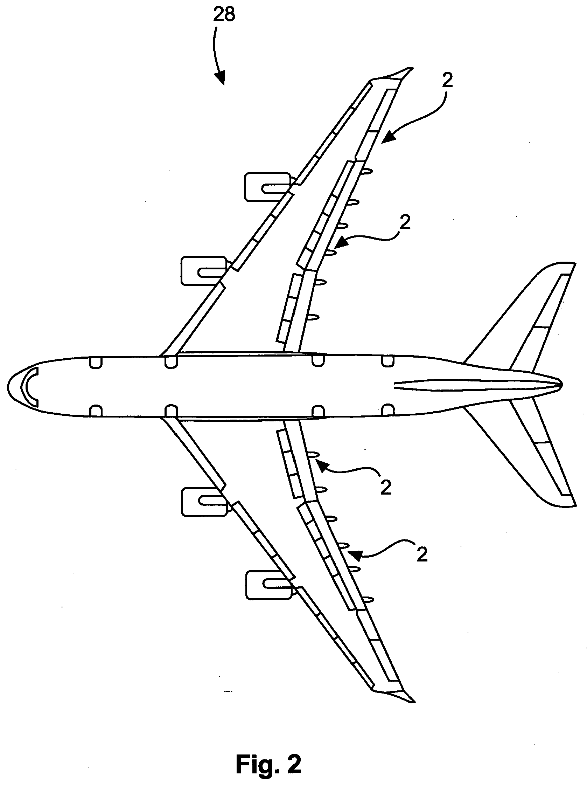

Schließlich zeigt Fig. 2 ein Flugzeug 28, das mit mindestens einer Flügelanordnung 2 ausgeführt ist. Diese Darstellung soll lediglich exemplarisch zu verstehen sein, so dass die Art und Anordnung derartiger Klappen nicht als verbindlich aufzufassen ist.

Ergänzend sei darauf hinzuweisen, dass "aufweisend" keine anderen Elemente oder Schritte ausschließt und "ein" oder "eine" keine Vielzahl ausschließt. Ferner sei daraufhingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkungen anzusehen.

### BEZUGSZEICHEN

- 2: Flügelanordnung
- 4: Flügel
- 6: Klappe (erste Position)
- 6': Klappe (zweite Position)
- 8: Hinterkantenbereich des Flügels
- 10: Verkleidungselement
- 12: Ausschnitt
- 14: Scharnierachse
- 16: Abdeckelement
- 18: Wandung
- 20: äußere Begrenzungskante
- 22: Bodenfläche
- 24: Wandung
- 26: Kante
- 28: Flugzeug
- 30: Flügelanordnung
- 32: Abdeckelement
- 34: Drehfeder
- 36: Wandung
- 38: Deckenelement

## Patentansprüche

1. Flügelanordnung (2) mit einer verstellbaren Klappe (6, 6'), die zwischen einer eingefahrenen Position und mindestens einer ausgefahrenen Position verstellbar ist, aufweisend
- mindestens ein Verkleidungselement (10) zum Verkleiden eines Klappenverstellmechanismus; und
- mindestens ein Abdeckelement (16);
wobei sich das Verkleidungselement (10) stromabwärts mindestens bis zu der Klappe (6, 6') erstreckt und an einer zu der Klappe (6, 6') gewandten Fläche einen Ausschnitt (12) aufweist, der mit einer vorgesehenen Verstellbewegung der Klappe (6, 6') korreliert; und
wobei das Abdeckelement (16) relativ zu dem Verkleidungselement (10) bewegbar angeordnet ist und dazu eingerichtet ist, in der eingefahrenen Position der Klappe den Ausschnitt (12) des Verkleidungselements (10) abzudecken und in einer ausgefahrenen Position zumindest teilweise freizugeben.

2. Flügelanordnung (2) nach Anspruch 1,
wobei das Verkleidungselement (10) mindestens eine zu einer Unterseite des Flügels winklig angeordnete Wandung aufweist;
wobei das Abdeckelement (16) mindestens eine korrespondierend geformte Abdeckwandung aufweist, die bündig an der Wandung (18, 24) des Verkleidungselements (10) anliegt.

3. Flügelanordnung (2) nach Anspruch 1 oder 2, wobei die Klappe (6, 6') um eine Scharnierachse (14) herum schwenkbar gelagert ist und dazu eingerichtet ist, eine teilweise Kreisbewegung um die Scharnierachse (14) zu vollführen.

4. Flügelanordnung (2) nach einem der vorhergehenden Ansprüche, wobei das Abdeckelement (16) federnd um eine Scharnierachse (14) an dem Verkleidungselement (10) gelagert ist.

5. Flügelanordnung (2) nach einem der vorhergehenden Ansprüche, wobei das Abdeckelement (16) zu mindestens einer Innenseite des Verkleidungselements (10) angeordnet ist.

6. Flügelanordnung (2) nach einem der vorhergehenden Ansprüche, wobei das Abdeckelement (16) an der zu dem Verkleidungselement (10) ragenden Seite der Klappe angeordnet ist.

7. Flügelanordnung (2) nach Anspruch 6, wobei das Abdeckelement mittels einem Befestigungsverfahren aus einer Gruppe von Befestigungsverfahren an der Klappe (6, 6') befestigt ist, die Gruppe aufweisend:
- formschlüssiges Verbindungsverfahren;
- kraftschlüssiges Verbindungsverfahren; und
- stoffschlüssiges Verbindungsverfahren.

8. Flügelanordnung (2) nach Anspruch 6, wobei zwischen der Klappe (6, 6') und dem Abdeckelement (16) eine elastische Zwischenlage angeordnet ist.

9. Flügelanordnung nach einem der Ansprüche 1 bis 8, wobei das Verkleidungselement (10) zwei Wandungen (24) zum Befestigen an einem Flügel (4) und ein Bodenelement (22) aufweist,
wobei die Wandungen (24) an einer dem Bodenelement (22) entgegengesetzten Seite einen kreissegmentförmigen Ausschnitt (12) zum Aufnehmen einer an dem Flügel (4) verschwenkbar angeordneten Klappe (6, 6') aufweisen und
wobei ein Abdeckelement (16, 32) mit zwei kreissegmentförmigen Wandungen, derart relativ zu dem Ausschnitt (12) schwenkbar anbringbar ist, dass beim Bewegen der an dem Flügel (4) schwenkbar angeordneten Klappe (6, 6') in eine ausgefahrene Position der Ausschnitt (12) des Verkleidungselements (10) abgedeckt und zumindest teilweise freigegeben wird.

10. Flügelanordnung (2) nach Anspruch 9, wobei das Abdeckelement dazu eingerichtet ist, an dem Verkleidungselement (10) schwenkbar angeordnet zu sein.

11. Flügelanordnung (2) nach Anspruch 9, wobei das Abdeckelement dazu eingerichtet ist, an der Klappe (6, 6') angeordnet zu werden.

## Claims

1. Wing arrangement (2) comprising an adjustable flap (6, 6'), which is adjustable between a retracted position and at least one extended position, comprising
- at least one fairing element (10) for covering a flap adjustment mechanism; and
- at least one cover element (16);
wherein the fairing element (10) extends downstream at least as far as the flap (6, 6') and has, in a surface facing the flap (6, 6'), a cutout (12) which correlates with an intended adjustment movement of the flap (6, 6'); and
wherein the cover element (16) is movably arranged with respect to the fairing element (10) and is adapted to cover the cutout (12) in the fairing element (10) in the retracted position of the flap and expose at least part of said cutout in an extended position.

2. Wing arrangement (2) according to claim 1,
wherein the fairing element (10) has at least one wall which is arranged at an angle to a lower side of the wing;
wherein the cover element (16) has at least one correspondingly formed cover wall which rests flush against the wall (18, 24) of the fairing element (10).

3. Wing arrangement (2) according to claim 1 or 2, wherein the flap (6, 6') is pivotally mounted about a hinge pin (14) and is adapted to effect a partial circular movement about the hinge pin (14).

4. Wing arrangement (2) according to any of the preceding claims, wherein the cover element (16) is spring-mounted about a hinge axis (14) on the fairing element (10).

5. Wing arrangement (2) according to any of the preceding claims, wherein the cover element (16) is arranged at at least one inner side of the fairing element (10).

6. Wing arrangement (2) according to any of the preceding claims, wherein the cover element (16) is arranged on the side of the flap which projects towards the fairing element (10).

7. Wing arrangement (2) according to claim 6, wherein the cover element is fixed to the flap (6, 6') by means of a fixing method from a group of fixing methods, said group comprising:
- positive connection method;
- non-positive connection method; and
- cohesive connection method.

8. Wing arrangement (2) according to claim 6, wherein a resilient intermediate layer is arranged between the flap (6, 6') and the cover element (16).

9. Wing arrangement according to any of the preceding claims 1 to 8, wherein the fairing element (10) comprises two walls (24) for fixing to a wing (4) and a base element (22);
wherein, on a side opposite the base element (22), the walls (24) have a circle-segment-shaped cutout (12) for receiving a flap (6, 6') which is pivotally arranged on the wing (4), and
wherein the cover element (16, 32) comprising two circle-segment-shaped walls is pivotally arranged with respect to the cutout (12) in such a manner, that when the flap (6, 6'), which is pivotally arranged on a wing (4), moves into an extended position covers the cutout (12) of the fairing element (10) is at least partially uncovered.

10. Wing arrangement (2) according to claim 9, wherein the cover element is adapted to be pivotally arranged on the fairing element (10).

11. Wing arrangement (2) according to claim 9, wherein the cover element is adapted to be arranged on the flap (6, 6').

## Revendications

1. Ensemble aile (2) comportant un volet réglable (6, 6') qui peut être réglé entre une position rentrée et au moins une position sortie, comportant :
- au moins un élément d'habillage (10) pour habiller un mécanisme de réglage de volet ; et
- au moins un élément de recouvrement (16) ;
dans lequel l'élément d'habillage (10) s'étend vers l'aval au moins jusqu'au volet (6, 6') et présente, sur une surface faisant face au volet (6, 6'), une découpe (12) qui est associée à un mouvement de réglage prévu du volet (6, 6') ; et
dans lequel l'élément de recouvrement (16, 32) est disposé mobile par rapport à l'élément d'habillage (10) et est conçu pour recouvrir la découpe (12) de l'élément d'habillage (10) dans la position rentrée du volet et pour la libérer au moins partiellement dans une position sortie.

2. Ensemble aile (2) selon la revendication 1,
dans lequel l'élément d'habillage (10) présente au moins une paroi disposée en formant un angle avec une face inférieure de l'aile ;
dans lequel l'élément de recouvrement (16) présente au moins une paroi de recouvrement formée de manière correspondante, qui est en appui à fleur contre la paroi (18, 24) de l'élément d'habillage (10).

3. Ensemble aile (2) selon la revendication 1 ou 2, dans lequel le volet (6, 6') est monté pivotant autour d'un axe de charnière (14) et est conçu pour accomplir un mouvement circulaire partiel autour de l'axe de charnière (14).

4. Ensemble aile (2) selon l'une quelconque des revendications précédentes, dans lequel l'élément de recouvrement (16) est monté de manière élastique autour d'un axe de charnière (14) au niveau de l'élément d'habillage (10).

5. Ensemble aile (2) selon l'une quelconque des revendications précédentes, dans lequel l'élément de recouvrement (16) est disposé vers au moins une face intérieure de l'élément d'habillage (10).

6. Ensemble aile (2) selon l'une quelconque des revendications précédentes, dans lequel l'élément de recouvrement (16) est disposé au niveau du côté du volet en saillie vers l'élément d'habillage (10).

7. Ensemble aile (2) selon la revendication 6, dans lequel l'élément de recouvrement est fixé au niveau du volet (6, 6') au moyen d'un procédé de fixation provenant d'un groupe de procédés de fixation, le groupe comportant :
- un procédé d'assemblage par complémentarité de forme ;
- un procédé d'assemblage à force ; et
- un procédé d'assemblage par liaison de matière.

8. Ensemble aile (2) selon la revendication 6, dans lequel une couche intermédiaire élastique est disposée entre le volet (6, 6') et l'élément de recouvrement (16).

9. Ensemble aile selon l'une des revendications 1 à 8, dans lequel l'élément d'habillage (10) présente deux parois (24) pour la fixation au niveau d'une aile (4) et un élément de sol (22),
dans lequel les parois (24) présentent au niveau d'une face opposée de l'élément de sol (22) une découpe (12) en forme de segment de cercle pour loger un volet (6, 6') disposé pivotant au niveau de l'aile (4) et
dans lequel un élément de recouvrement (16, 32) comportant deux parois en forme de segment de cercle peut être monté pivotant de telle manière par rapport à la découpe (12) que, en faisant bouger le volet (6, 6') disposé pivotant au niveau de l'aile (4) dans une position sortie, la découpe (12) de l'élément d'habillage (10) est recouverte et au moins partiellement libérée.

10. Ensemble aile (2) selon la revendication 9, dans lequel l'élément de recouvrement est conçu pour être disposé pivotant au niveau de l'élément d'habillage (10).

11. Ensemble aile (2) selon la revendication 9, dans lequel l'élément de recouvrement est conçu pour être disposé pivotant au niveau du volet (6, 6').
